# EUROPEAN PATENT APPLICATION

(11) **EP 4 560 155 A1**
(43) Date of publication of application: **28.05.2025**
(21) Application number: 23211029.6
(22) Date of filing: 21.11.2023
(51) Int. Cl.: F16B 33/02

(54) **THREADED DEVICE, FILTER ASSEMBLY AND VEHICLE**

(71) Applicant: KNORR-BREMSE Systeme für Nutzfahrzeuge GmbH, 80809 München (DE)
(72) Inventor: TOTH, Zoltan Laszlo, 6100 Kiskunfélegyháza (HU); OLAH, Tibor, 6000 Kecskemét (HU); PALICSKA, Domonkos, 6000 Kecskemét (HU); GAIKWAD, Prashant, 411033 Pune (IN)

(57) **Abstract**

The present invention relates to a threaded device (1, 2) comprising a thread formed by a load flank (11, 21), a crest (12, 22), a stab flank (14, 24) and a root (15, 25), wherein the load flank (11) and the stab flank (14) are oriented rearward with respect to a screwing direction (S1, S2) to screw the threaded device (1, 2) in or on a mating thread, wherein the threaded device (1, 2) further comprises a transition portion (13, 13', 13", 23) as a transition area between the load flank (11, 21) and the crest (12, 22), and wherein the transition portion (13, 13', 13", 23) is formed such that at least two tangents (T1, T2) of the transition portion (13, 13', 13", 23) are inclined with respect to each other.

## Description

The present invention relates to a threaded device, particularly a filter cartridge or filter cartridge base, a filter assembly and a vehicle comprising such filter assembly.

Threaded devices for a thread connection may become subject to different impacts such as ripping out force which may damage the thread connection or even rips out a respective threaded device. For example, vehicles with combustion engines may comprise several filters which are provided as a filter cartridge to be threaded to a filter cartridge base. The respective thread connection allows replacement of the filter cartridge in an easy manner. However, a pressure force due to the flow of gas to be filtered exhibits a pressure force on the thread connection as a ripping out force. Other impacts may have similar effects. Such rough environment is particularly applicable to filter cartridges in commercial vehicle applications and specifically to air-dryer filter cartridges for compressed air systems of such commercial vehicle, such as for a brake system or the like.

To reduce the risk of filter cartridges being ripped out with respect to the thread connection, EP 3 303 856 A1 proposes a thread connection between a filter cartridge and its base, wherein a respective thread has a reversed load flank. The reversed load flank may allow to increase a cohesion force of the thread connection in the event of a ripping out force. To allow a clearance between the crest of the thread of the filter cartridge as a female thread and the root of the thread of the base as a male thread, the crest is provided with a flat portion. However, such flat portion may cause early cracks on the male thread side. Specifically, due to the flat portion, material stress in the sharp corners on the male and female thread side increases.

It is an object of the present invention to provide an improved thread connection.

The object is solved by the subject matter of the independent claims. Further aspects of the present invention are subject to the dependent claims.

According to the present invention, a threaded device comprises a thread formed by a load flank, a crest, a stab flank, and a root, wherein the load flank and the stab flank are oriented rearward with respect to a screwing direction to screw the threaded device in or on a mating thread. The threaded device further comprises a transition portion as a transition area between the load flank and the crest. The transition portion is formed such that at least two tangents of the transition portion are inclined with respect to each other.

In principle, the load flank is the flank of the thread receiving the load in response to a ripping out force by being pressed against the mating flank of another thread for a respective thread connection. For example, with a filter cartridge comprising a female thread as filter cartridge thread to be screwed on a filter cartridge base comprising a male thread as filter cartridge base thread, the screwing direction for the filter cartridge is toward the filter cartridge base. In such configuration, a pressure force by compressed air or the like is mainly directed against the screwing direction. Accordingly, the load flank of the female thread or filter cartridge thread, respectively, is the flank of two flanks between which the respective crest is provided which faces in the direction of the pressure force. In turn, the load flank of the male thread or filter cartridge base thread, respectively, is the flank of two flanks between which the respective crest is provided which faces in the opposite direction of the pressure force. In other words, the load flanks of a female thread and a male thread are the flanks facing each other and subject to receiving the main load in response to the pressure force or a respective ripping out force.

According to the rearward orientation of the load flank and the stab flank with respect to a respective screwing direction, the load flank and the stab flank are oriented away from a body portion comprising a respective mating thread. For example, in the above configuration of a filter cartridge comprising a female thread as filter cartridge thread to be screwed on a filter cartridge base comprising a male thread as filter cartridge base thread, the filter cartridge can be screwed on the filter cartridge base with the load flank and stab flank of the filter cartridge being are oriented backwards with respect to the screwing on direction to screw the filter cartridge on the filter cartridge base. In turn, the filter cartridge base can be screwed in the filter cartridge with the load flank and stab flank of the filter cartridge base being oriented backwards with respect to the screwing in direction to screw the filter cartridge base in the filter cartridge. In both constellations, the load flank and the stab flank are each oriented away from the mating partner for a thread connection in the screwing direction.

Specifically, based on the rearward orientation of the load flank, cohesion of a respective filter assembly or thread connection, respectively can be increased in response to a pressure force or the like resulting in a ripping out force. With the transition portion between the crest and the load flank being formed such that at least two tangents of the transition portion are inclined with respect to each other, a shorter lever arm of a force is acting. Accordingly, the bending torque caused the load flank, for example the female thread, on the load flank of the mating thread, for example the male thread, may be reduced. This may contribute to the avoidance of early cracks. Furthermore, the contact surface of the load flanks may be increased, in particular with respect to a flat portion being provided between the crest and the load flank. The increased contact surface allows a better stress distribution.

The transition portion is the portion between the crest and the load flank. Specifically, the transition portion connects the outer contour of the crest with the outer contour of the load flank. However, to allow the contact surface to be increased, the transition portion is formed such that at least two tangents of the transition portion are inclined with respect to each other. In other words, the transition portion is not a flat portion but provides at least two points with tangents applied in each of the points intersecting which each other. Accordingly, with respect to a cross-section along the central axis of a thread the transition portion is not formed as the shortest connection between the crest and the load flank.

In some embodiments, the transition portion is formed by a curve.

Accordingly, a cross-section along the central axis of the respective thread shows a curve as transition from the crest to the load flank. For example, the transition portion formed as a curve is the portion of the cross section where the load flank and the crest stop to extend straight. In other words, with respect to the load flank and crest extending substantially straight, the transition portion formed by a curve in a cross-section along the central axis of the respective thread may be defined as the portion where an extension of the load flank and the crest becomes a virtual extension. The transition portion formed as a curve may therefore also be described as a portion starting and ending at intersections of a secant with the load flank and the crest, where extensions of the load flank and the crest end to follow a straight line or at least an averaged straight line.

Preferably, the curve is formed to provide a substantially smooth transition from the crest to the transition portion and/or from the transition portion to the load flank. The term "substantially smooth" relates to the avoidance of sharp edges which may otherwise damage a mating thread during assembly or in response to a load. Further, an increased contact surface on the load flank side may be achieved to improve stress distribution.

In some embodiments, the curve is defined by a constant radius.

Accordingly, a cross-section along the central axis of the respective thread shows a curve with a constant radius as transition from the crest to the load flank. With respect to the example of the load flank and the crest each extending straight, the cross-section of the thread along the central axis thereof may be described as a straight line of the load flank followed by a circular segment as the transition portion followed by a straight line of the crest.

The constant radius of the curve eases manufacturing of the transition portion. Further, by the curve, particularly, be the curve with the constant radius, the stress distribution is improved due to the avoidance of sharp edges. Accordingly, the risk of damaging the mating thread, e.g. a male thread with the female thread proving the curved transition portion, may be decreased. The stress distribution may be also improved by the increased surface of the load flank compared to a flat portion.

In some embodiments, transition portion is formed by an edge.

Accordingly, a cross-section along the central axis of the respective thread shows an edge as transition from the crest to the load flank. The transition portion may thereby be described as any portion between the load flank and the crest forming an edge therebetween. In some embodiments, the transition portion formed by an edge or forming an edge may provide at least one flank as an extension of the load flank and/or the crest.

With the transition portion formed by an edge or forming an edge, respectively, the contact surface on the load flank side is increased to a maximum. Even though a resulting edge is thereby formed, which may act on the corresponding load flank of a mating thread, any further edge in the transition of the crest to the load flank is avoided. Specifically, no edge is formed on a radial outer side of the thread between the load flank and the stab flank, which may damage the root of a mating thread.

Here, with respect to the tangents inclined two each other, at least one of the two tangents relates to the load flank, while the at least one other tangent relates to the crest.

In some embodiments, a crest angle between at least a virtual extension of the load flank and the crest is an acute angle.

The virtual extension of the load flank and the crest is the extension of the load flank contour and the crest contour in a cross section along the central axis of the thread. The crest angle is formed by a respective intersection of at least the virtual extension of the load flank and at least the virtual extension of the crest with the respective load flank and crest representing the crest angle between each other. The term *"at least a virtual extension"* refers to an extension if the extension of the respective part of the thread is not directly applicable.

In some embodiments, the crest extends substantially in parallel to a central axis of the thread.

With the crest extending substantially in parallel to the central axis of the thread, a sharp edge pointing in the direction of a root of a mating thread may be avoided. Accordingly, the term "substantially in parallel" refers to slight deviations which do not significantly affect a mating thread.

In some embodiments, a root angle between at least a virtual extension of the root in a direction, in which the root extends from the load flank to the stab flank, and the central axis of the thread forms an acute angle.

Accordingly, the root angle allows a clearance with respect to the crest of mating thread, specifically a mating thread providing a crest angle in parallel to the central axis.

In some embodiments, the thread of the threaded device is a female thread.

Accordingly, the threaded device providing the female thread as previously described allows the bending torque on a male thread of a mating thread to be reduced to avoid early cracks on the male thread side. Further, damages on the male thread of a mating thread during assembly may be avoided and the increased contact surface may allow a better stress distribution.

In some embodiments, the thread of the threaded device is a male thread.

Similar as per the above, the threaded device providing the male thread as previously described allows the bending torque on a female thread of a mating thread to be reduced to avoid early cracks on the female thread side. Further, damages on the female thread of a mating thread during assembly may be avoided and the increased contact surface may allow a better stress distribution.

With respect to the above, a threaded device with a mating thread may be of the same configuration as the threaded device as previously described or may at least comprise one or more of respectively described features. With respect to the same configuration, threaded device with a mating thread may provide a male thread or female thread, respectively, corresponding to the female thread or male thread, respectively, of the threaded device as previously described with respect to the addressed features in general but may still provide differences in some of the concrete dimensions. However, the same configuration may also apply for identical dimensions.

In some embodiments, the threaded device is a filter cartridge.

Accordingly, the filter cartridge as a threaded device may be screwed on or screwed in a mating thread of a conventional configuration of a filter cartridge base. Therefore, already assembled filter cartridge bases do not have to be replaced while achieving at least an effect by the thread of the filter cartridge.

The term filter cartridge is intended to not only represent a concrete cartridge but also any other kind of container comprising a filter cartridge for a thread connection to a filter cartridge base to operatively connect the filter cartridge.

In some embodiments, the threaded device is a filter cartridge base.

Similarly as per the above, the filter cartridge base as a threaded device may be screwed on or screwed in a mating thread of a conventional configuration of a filter cartridge. Therefore, available filter cartridges may still be used while achieving at least an effect by the thread of the filter cartridge base.

In another aspect, the present invention relates to a filter assembly comprising a filter cartridge as previously described and a filter cartridge base with a mating thread.

In concrete, in view of the above, the filter cartridge of the filter assembly comprises a thread as previously described, for example, a female thread with the filter cartridge base comprising the mating thread, for example with respect to the female thread of the filter cartridge, a male thread. As already said, the mating thread of the filter cartridge base may also provide at least one of the thread features as previously described or may even be of the same configuration as the thread of the filter cartridge.

In another aspect, the present invention relates to a filter assembly comprising a filter cartridge base as previously described and a filter cartridge with a mating thread.

Similarly as per the above, the filter cartridge base of the filter assembly comprises a thread as previously described, for example, a male thread with the filter cartridge comprising the mating thread, for example with respect to the male thread of the filter cartridge base, a female thread. As already said, the mating thread of the filter cartridge may also provide at least one of the thread features as previously described or may even be of the same configuration as the thread of the filter cartridge base.

With respect to the two configurations of the filter assembly, the filter assembly provides at least one of the filter cartridge and the filter cartridge base with a thread as previously described.

In principle, any feature described with respect to the threaded device and/or a respective filter cartridge and filter cartridge base, respectively, is also applicable to the filter assembly and vice versa.

In another aspect, the present invention relates to a compressor assembly comprising a threaded device and/or filter assembly according as previously described.

For example, alternatively or in addition to the filter assembly, the compressor may comprise a dryer cartridge, an air treatment cartridge, an air processing cartridge or oil removing cartridge, and/or a respective base therefore to form at least one threaded device of a dryer unit, an air treatment unit, an air processing unit or an oil removing unit.

In principle, any feature described with respect to the filter assembly and/or a respective threaded device is also applicable to the compressor assembly and vice versa.

In another aspect, the present invention relates to a vehicle comprising a threaded device and/or a filter assembly as described above, wherein the vehicle is preferably configured as a commercial vehicle.

In principle, any feature described with respect to the filter assembly and/or a respective threaded device is also applicable to the vehicle and vice versa. The filter assembly and/or the respective threaded device may be comprised by a compressor of the vehicle as previously addressed.

Further advantages, aspects and details of the invention are subject to the claims, the following description of exemplary embodiments applying the principles of the invention, and the respective exemplary drawings.
**Figure 1** is a cross-sectional schematic view of a filter assembly the present invention is applicable to;
**Figure 2** is a cross-sectional schematic view of a section of the filter assembly with a thread connection as per a first exemplary embodiment;
**Figure 3** is a cross-sectional schematic view of a section of the female thread as per the first exemplary embodiment;
**Figure 4** is a cross-sectional schematic view of a section of the female thread as per a second exemplary embodiment; and
**Figure 5** is a cross-sectional schematic view of a section of the female thread as per a third exemplary embodiment.

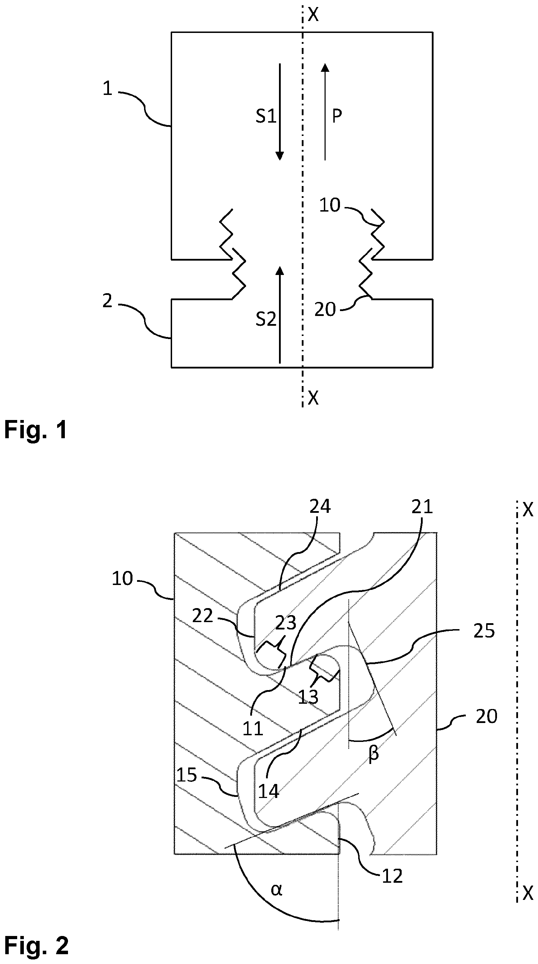

**Figure 1** shows a cross-sectional schematic view of a filter assembly, the present invention is applicable to. The filter assembly comprises a filter cartridge 1 comprising a female thread 10 as a filter cartridge thread, and a filter cartridge base 2 comprising a male thread 20 as a filter cartridge base thread. The female thread 10 and the male thread 20 are mating threads for a thread connection with the same central axis X-X along which a respective thread 10, 20 extends. With respect to the filter cartridge base 2 being fixedly mounted in a commercial vehicle or the like, the filter cartridge 1 is screwed on the filter cartridge base 2 in a screwing direction S1 of the filter cartridge 1 as indicated by the respective arrow. In turn, if assuming that the filter cartridge base 2 is not fixedly mounted, the filter cartridge base 2 may be screwed in the filter cartridge 1 in a screwing direction S2 of the filter cartridge base 2 as indicated by the respective other arrow. Here, a pressure P due to a gas flow from the filter cartridge base 2 in the filter cartridge 1 acts in a direction opposite to the direction of the screwing direction S1 of the filter cartridge 1 as indicated by the respective further arrow. The pressure P causes a ripping out force on the filter cartridge 1.

**Figure 2** shows a cross-sectional schematic view of a section of the filter assembly with a thread connection as per a first exemplary embodiment. The section corresponds to a thread connection section on the left in Fig. 1.

Here, with respect to the female thread 10 of the filter cartridge 1, the thread formed by a load flank 11, a crest 12, a stab flank 14 and a root 15 provides a rearward thread with respect to the screwing direction S1 of the filter cartridge 1. In concrete, the load flank 11 and the stab flank 14 are oriented rearward with respect to the screwing direction S1 of the filter cartridge 1. In the embodiment, the crest 12 extends in parallel to the central axis X-X of the thread. However, in other embodiments, the crest 12 may extend inclined with respect to the central axis X-X of the thread. The extension of the crest 12 and the extension of the load flank 11 or at least virtual extensions thereof in the cross section along the central axis X-X form a crest angle α as an acute angle. A transition portion 13 is provided between the load flank 11 and the crest 12. The transition portion 13 as further described below is a portion of the thread extending beyond a secant in a direction away from the root 15 intersecting the at least virtual extensions of the load flank 11 and the crest 12, here, at a point, where the extension starts to become a virtual extension.

Similarly, with respect to the male thread 20 of the filter cartridge base 2, the thread formed by a load flank 21, a crest 22, a stab flank 24 and a root 25 provides a rearward thread with respect to the screwing direction S2 of the filter cartridge base 2. In concrete, the load flank 21 and the stab flank 24 are oriented rearward with respect to the screwing direction S2 of the filter cartridge base 2. In the embodiment, the crest 22 also extends in parallel to the central axis X-X of the thread. However, in other embodiments, the crest 22 may extend inclined with respect to the central axis X-X of the thread. The extension of the crest 22 and the extension of the load flank 21 or at least virtual extensions thereof in the cross section along the central axis X-X also form a crest angle α as an acute angle. A transition portion 23 is provided between the load flank 21 and the crest 22. The transition portion 23 is a portion of the thread extending beyond a secant in a direction away from the root 25 intersecting the at least virtual extensions of the load flank 21 and the crest 22, here, at a point, where the extension starts to become a virtual extension. An extension or at least virtual extension of the root 25 with a straight line in parallel to the central axis X-X forms a root angle β as an acute angle. In principle, specifically with respect to the crest 12 of the female thread 10 extending in parallel to the central axis X-X, the root angle β on the male thread 20 side allows a clearance between the crest 12 of the female thread 10 and the root 25 of the male thread 20 to ease screwing. A respective root angle β may also be provided by the root 25 of the female thread 10. In some embodiments, the root angle β of the male thread 20 may be different from the root angle of the female thread 10.

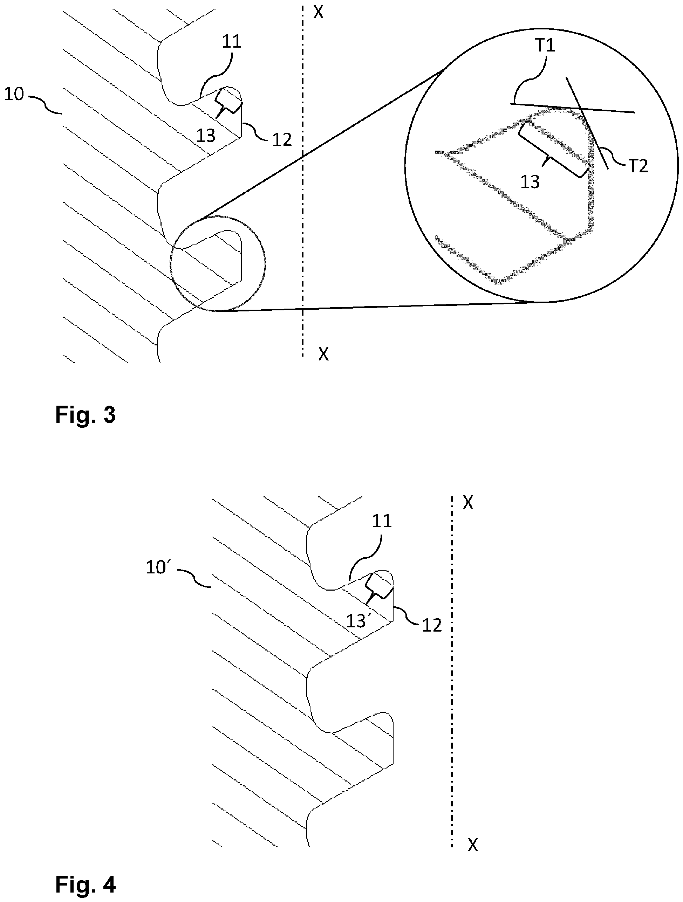

**Figure 3** shows a cross-sectional schematic view of a section of the female thread 10 as per the first exemplary embodiment. In the first exemplary embodiment, the transition portion 13 of the female thread 10 of the filter cartridge 1 is a curve formed as a section of an ellipse. However, in other embodiments, the curve may be defined differently, for example, as a section of a parabola or other mathematical function of a curve.

Further, Figure 3 shows an enlarged view of the transition portion 13 with two exemplary tangents T1, T2 applied at two exemplary points of the transition portion 13 in the cross-section view along the central axis X-X. The tangents T1, T2 are inclined to each other as apparent by their intersection. In principle, any point of the curve provides a tangent inclined to another tangent of another point of the curve.

**Figure 4** shows a cross-sectional schematic view of a section of the female thread 10' as per a second exemplary embodiment. In the second exemplary embodiment, the transition portion 13' of the female thread 10' of the filter cartridge 1 is formed by a circular section with a constant radius as a special type of a section of an ellipse as a curve.

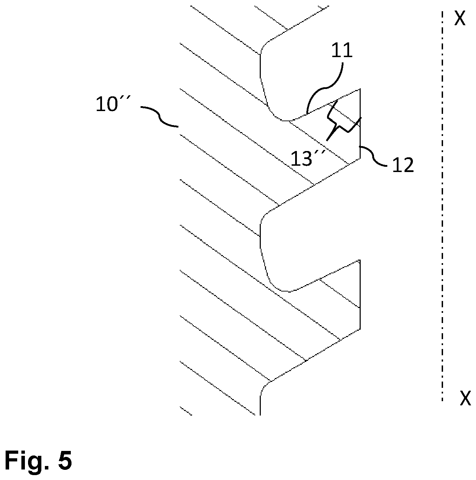

**Figure 5** shows a cross-sectional schematic view of a section of the female thread 10" as per a third exemplary embodiment. In the third exemplary embodiment, the transition portion 13" of the female thread 10" of the filter cartridge 1 is formed by an edge or as an edge portion.

The invention has been described with respect to exemplary embodiments. However, the invention is not limited to the exemplary embodiments. For example, even though some of the features may be only described with respect to a male or female thread, respective features may also be applicable to the respective mating thread. Further, any feature described with respect to a male or female thread may be provided by at least one of the threads of a respective thread connection. It is further apparent that the thread of a filter cartridge may also be provided as a male thread with a filter cartridge base providing a female thread. Even though the described embodiments relate to a filter cartridge and filter cartridge base, the present invention is not limited to such configuration. For example, the threaded device may also be a dryer cartridge, an air treatment cartridge, an air processing cartridge or oil removing cartridge, particularly for compressors, and/or a respective base therefore to form at least one threaded device of a dryer unit, an air treatment unit, an air processing unit or an oil removing unit. In this regard, the term filter assembly may be synonymously used for a dryer unit, an air treatment unit, an air processing unit or oil removing unit.

### LIST OF REFERENCE SIGNS

- 1: filter cartridge
- 2: filter cartridge base
- 10, 10', 10": female thread (filter cartridge thread)
- 11: load flank (female thread)
- 12: crest (female thread)
- 13, 13', 13": transition portion (female thread)
- 14: stab flank (female thread)
- 15: root (female thread)
- 20: male thread (filter cartridge base thread)
- 21: load flank (male thread)
- 22: crest (male thread)
- 23: transition portion (male thread)
- 24: stab flank (male thread)
- 25: root (male thread)
- P: pressure
- S1: screwing direction (filter cartridge)
- S2: screwing direction (filter cartridge base)
- T1, T2: tangents (transition portion)
- X-X: central axis
- α: crest angle
- β: root angle

## Claims

1. A threaded device (1, 2) comprising a thread formed by a load flank (11, 21), a crest (12, 22), a stab flank (14, 24) and a root (15, 25), wherein the load flank (11) and the stab flank (14) are oriented rearward with respect to a screwing direction (S1, S2) to screw the threaded device (1, 2) in or on a mating thread, wherein
the threaded device (1, 2) further comprises a transition portion (13, 13', 13", 23) as a transition area between the load flank (11, 21) and the crest (12, 22), and wherein
the transition portion (13, 13', 13", 23) is formed such that at least two tangents (T1, T2) of the transition portion (13, 13', 13", 23) are inclined with respect to each other.

2. The threaded device (1, 2) according to claim 1, wherein the transition portion (13, 13', 23) is formed by a curve.

3. The threaded device (1, 2) according to claim 2, wherein the curve is defined by a constant radius.

4. The threaded device (1) according to claim 1, wherein the transition portion (13") is formed by an edge.

5. The threaded device (1, 2) according to any one of the preceding claims, wherein a crest angle (α) between at least a virtual extension of the load flank (11, 21) and the crest (12, 22) is an acute angle.

6. The threaded device (1, 2) according to any one of the preceding claims, wherein the crest (12, 22) extends substantially in parallel to a central axis (X-X) of the thread.

7. The threaded device (1, 2) according to any one of the preceding claims, wherein a root angle (β) between at least a virtual extension of the root (15, 25) in a direction, in which the root (15, 25) extends from the load flank (11, 21) to the stab flank (14, 24), and the central axis (X-X) of the thread forms an acute angle.

8. The threaded device (1, 2) according to any one of the preceding claims, wherein the thread of the threaded device (1) is a female thread.

9. The threaded device (1, 2) according to any one of the preceding claims, wherein the thread of the threaded device (2) is a male thread.

10. The threaded device (1) according to any one of the preceding claims, wherein the threaded device (1) is a filter cartridge (1).

11. The threaded device (2) according to any one of the preceding claims, wherein the threaded device (2) is a filter cartridge base (2).

12. A filter assembly comprising a filter cartridge (1) according to claim 10 and a filter cartridge base (2) with a mating thread.

13. A filter assembly comprising a filter cartridge base (2) according to claim 11 and a filter cartridge (1) with a mating thread.

14. Compressor assembly comprising a threaded device (1, 2) according to any one of the claims 1 to 11 and/or filter assembly according to claim 12 or 13.

15. A vehicle comprising a threaded device (1, 2) according to any one of the claims 1 to 11 and/or a filter assembly according to claim 12 or 13, wherein the vehicle is preferably configured as a commercial vehicle.
